# EUROPEAN PATENT SPECIFICATION

(11) **EP 1 542 135 B1**
(45) Date of publication and mention of the grant of the patent: **09.10.2013**
(21) Application number: 02760060.0
(22) Date of filing: 22.08.2002
(51) Int. Cl.: G06F 17/30, G06F 17/00, H04L 29/06

(54) **A METHOD WHICH IS ABLE TO CENTRALIZE THE ADMINISTRATION OF THE USER REGISTERED INFORMATION ACROSS NETWORKS**
VERFAHREN MIT DER FÄHIGKEIT ZUR ZENTRALISIERUNG DER ADMINISTRATION DER BENUTZERREGISTRIERTEN INFORMATIONEN ÜBER NETZWERKE HINWEG
PROCEDE PERMETTANT DE CENTRALISER L'ADMINISTRATION DES INFORMATIONS ENREGISTREES DES UTILISATEURS DE RESEAUX

(30) Priority: 05.08.2002 CN 02125941
(43) Date of publication of application: 15.06.2005
(73) Proprietor: Taiguen Technology (Shen_zhen) Co., Ltd., Gongming, Baoan District Shenzhen City 518106 (CN)
(72) Inventor: SHI, Xuanming, Chungli City, Taoyuan Hsien, Taiwan (CN)
(74) Representative: Tomlinson, Edward James
(86) International application number: PCT/CN2002/000581
(87) International publication number: WO 2004/013767

(56) References cited:
- EP-A2- 0 644 513
- EP-A2- 0 869 460
- WO-A1-01/60013
- CN-A- 1 294 715
- CN-A- 1 319 810
- KR-A- 20010 008 298

## Description

### Technical Field

The present invention relates to a method and a system for identifying and administrating user registration information in networks, and more particularly, to a method and a system for centralizing administration of the user registration information across networks. The invention belongs to the computer technical field.

### Background of The Invention

Network is increasingly involved in people's daily life. Using a network to exchange and transmit information is becoming a more and more important information alternating communication method. In an actual operation, a user has to enter his username and password when logging in a website. The network will only provide the user with particular services after the user is identified. These operations become very bothering when the user has registered on a plurality of websites.

Microsoft has provided a network passport identification service, which allows the user using one username and one password to access appendant websites of Microsoft.com and increasing number of participant websites.

Microsoft Passport is a kind of mono-service, which allows the user using only one username and one password to access appendent websites of Microsoft.com and increasing number of participant websites. Owning a Passport means that you only need to remember one username and one password, and the technique is very easy. Because there is only one username and password to remember, you need only one click operation to log in other websites after you have logged in a participant website, and it is very fast. A user can store his information in the passport login profile, therefore he will not have to enter his personal information once more while accessing other participant websites, which is safer. The user's personal information is protected by a powerful encryption technology and rigid privacy security measures, and the user can always control which website is able to access his personal information including his e-mail and mail addresses. Furthermore, when the user logs out, all the information related to his passport will be deleted from the computer, so it is safe to use his personal information on public or shared computers.

Once having a .NET passport, the user can access each new website without registering username and password —as long as he has logged in any one of the participant websites or services by using his email address and password which were adopted in registering the .NET Passport. When the user enters his username and password in the login box to log in a .NET passport participant website, the .NET Passport will verify the following information:

Whether the entered username has been registered as .NET Passport; whether the entered password is correct. If the result is positive, the .NET Passport service will inform the website about the user ID (in the case that valid login certification has been provided), and then the user will be permitted to access the participant website. Once having logged in a participant website of the .NET Passport during an Internet session, the user can log in other participant websites by a single click on the ".NET Passport login" button in each participant website.

The user's operation comprises the following steps:
1. Register the username and password of the .NET Passport (the username is an Email address);
2. Log in any of the participant websites or services;
3. Enter the username and password in the login box of the .NET Passport;
4. The access to the participant website is permitted (login succeeds) if the username is registered as .NET Passport and the entered password is correct;
5. During the Internet session, it is not necessary to enter the password again when the user logs in other participant websites or services.

Although owning a Passport means that the user only needs to remember one username and password, it is hard to modify all the data formats uniform and the number of websites participating in the Passport is limited due to the difference of existing data formats of different websites. The Windows provides a function for remembering usernames and passwords, but it only fits for some personal computers since the function only exists in local computers which results in less security and portability.

ep0869460 discloses a method for storing information on a smart card, whereby each of a plurality of service providers can only access a corresponding part of said information.

wo0160013 discloses a single-sign-on method which uses a smart card for storing a plurality of credentials, all of which can be accessed on the basis a single secret

### Summary of The Invention

The object of the invention is to provide a system and a method for centralizing administration of user registration information across networks, and to quickly and conveniently provide a safe and universal login mode, in the case that the Internet Content Provider (ICP) makes no modification or only simple medications to the web page.

Another object of the invention is to provide a system and a method for centralizing administration of user registration information across networks. The user can log in networks conveniently by using the system which is safe, flexible and can be moved at any time.

The objects of the invention are achieved as follows:

A method for centralizing administration of user registration information across networks, including at least an Internet Content Provider (ICP) and a user-login-identification means which can access an online terminal; wherein, the ICP adds an interface module in a login web page and accesses the user-login-identification means via the interface module, and the ICP also provides an administration/drive module monitoring access of the user-login-identification means to set up a connection and hang up the connection for the user-login-identification means in the login web page; the user-login-identification means is provided with an ID number , and the user's login identification information is stored in the user-login-identification means.

Authenticating the ICP includes the steps of, obtaining an authentication file, transmitting the authentication file to the administration/drive module, decrypting the authentication file by the administration/drive module, and accessing the user-login-identification means.

The administration/drive module can lead in and/or lead out the data stored in the user-login-identification means so as to backup the data. The administration/drive module can also automatically log in the network after the ICP has accessed user-login-identification means via the interface module and verified the identification information.

Furthermore, the authentication between the ICP and the login verification serving party can also be achieved in online mode according to the invention. The ICP accesses the login verification serving party, and the login verification serving party transmits a code of the user-login-identification means to the ICP which adds the login identification information in the login web page according to the code. The interface module transmits the ICP information to the login verification serving party for verification, and the access to the user-login-identification means is permitted in the case of valid verification. The Login verification serving party maintains a database of authentication files so as to manage the authentication files.

The login verification serving party and/or the ICP website provide an interface module and an administration/drive module, and verify whether the interface module and the administration/drive module have been downloaded. If positive, the modules are activated; if negative, the modules are downloaded firstly, and then activated. In the case that the user-login-identification means is in an active state, the ICP can access the user-login-identification means only after it has been authenticated by the login verification serving party.

Particularly, accessing the user-login-identification means includes storing or reading login identification information in the user-login-identification means. The login verification serving party transmits an authentication file to the ICP, and the ICP accesses the user-login-identification means according to the file. The authentication file includes ICP identification information, and/or specific area guide information of the user-login-identification means and/or data processing guide information.

Furthermore, a registration table of the ICP identification information is stored in the user-login-identification means, and is used for guiding different ICPs to access the corresponding areas or contents while accessing the user-login-identification means. The administration/drive module can lead in and/or lead out the data stored in the user-login-identification means so as to backup the data, and can also automatically log in the network after the ICP has accessed the user-login-identification means via the interface module and verified the identification information.

Furthermore, the ICP reads out the information stored in the user-login-identification means via the interface module. If login identification information is obtained, the interface module returns the login identification information to the ICP web page and determines whether an automatic submit and login should be performed according to the user's setup; if the login identification information is not obtained, the interface module informs the web page that login identification information is not available and stores the generated login identification information in the user-login-identification means.

Storing the login identification information includes the ICP storing the login identification information in the user-login-identification means via the interface module, in the case that the user logs in the ICP website for the first time, or the user selects to manually enter the login information once more, or the user-login-identification means is used for the first time.

The ICP web page is provided with a registration information window; the ICP invokes parameters of the interface module and saves several sets of registration information of the same web page or the last set of registration information.

For example, The ICP web page is provided with a registration information window. The ICP accesses the user-login-identification means via the interface module and verifies the login identification information provided by the ICP web page, and stores the new login identification information in the user-login-identification means to overwrite the original login identification information, and then transfers the relating information to the ICP web page. The information is displayed on the web page after being obtained.

Moreover, the ICP web page is provided with a plurality of window links to the registration information. The ICP reads the user-login-identification information stored in the user-login-identification means and verifies the login identification information provided by the ICP web page; if negative, the ICP stores the login identification information in the user-login-identification means, if positive, the ICP directly reads it out and transfers the relating information to the ICP web page. The information is displayed on the web page after being obtained.

Particularly, the user login identification information includes the ICP identification information or the form information or the user identification information or the combination of the above.

A system for realizing any one of the said methods comprises a computer, Internet networks, an ICP and a user-login-identification means, wherein the computer can log in the internet network to communicate with different ICPs; the user-login-identification means is capable of accessing the computer from outside and has at least an identification number and encryption storage space. The user-login-identification means performs the information transmission by operating the computer.

The information transmission between the computer and the user-login-identification means is processed with encryption or decryption. The encryption includes protecting an encryption area by using the user's PIN code or encryption utilizing RSA 512PK1 key management. The user-login-identification means is also provided with a storage region for storing the information of the ICP itself.

Particularly, the user-login-identification means can be an external and portable memory means with a standard data interface, or a card-reader means or an ID identifying means thereof, for example, a USB storage device, a CF card, a MMC card, a SD card, a SMC card, an IBM Micro Drive card, a flash storage module or an IC card, or the corresponding card reader therein.

Moreover, the user-login-identification means can be a computer peripheral, such as a keyboard, a mouse, a handwriting board, sound boxes, or a portable PDA, a music player, or an electrical dictionary.

Furthermore, the ICP of the system of this invention is connected with a login verification serving party, which transmits the code of the user-login-identification means to the ICP, and the ICP adds the login identification information on the web page according to the code. The interface module transmits the ICP information to the login verification serving party to verify the information, and the access to the user-login-identification means is permitted if the verification is valid. In particular, the login verification serving party is a server.

According to analyzing the above technical solution, it is obvious that the invention has the following advantages:
1. The registration information is centralized so that the bothering operations of logging in networks are simplified.
2. The portable hardware can be carried by the user, and can be used at any time or any place.
3. The security of the user's personal information is guaranteed by the double encryption of both hardware and data.
4. The user's operation is visual and simple because of the practical function management provided by the administration /drive module.
5. The ICP doesn't need to modify the existing data format.
6. The ICP obtains a flexible interface, which can be extended with many customized applications besides the login application.

### Brief Description Of The Drawings

Figure 1 is a schematic network system according to the invention;
Figure 2 is a flowchart illustrating the user accessing the ICP to download the administration/drive module according to the invention;
Figure 3 is a flowchart illustrating the ICP accessing the user-login-identification means according to the invention;

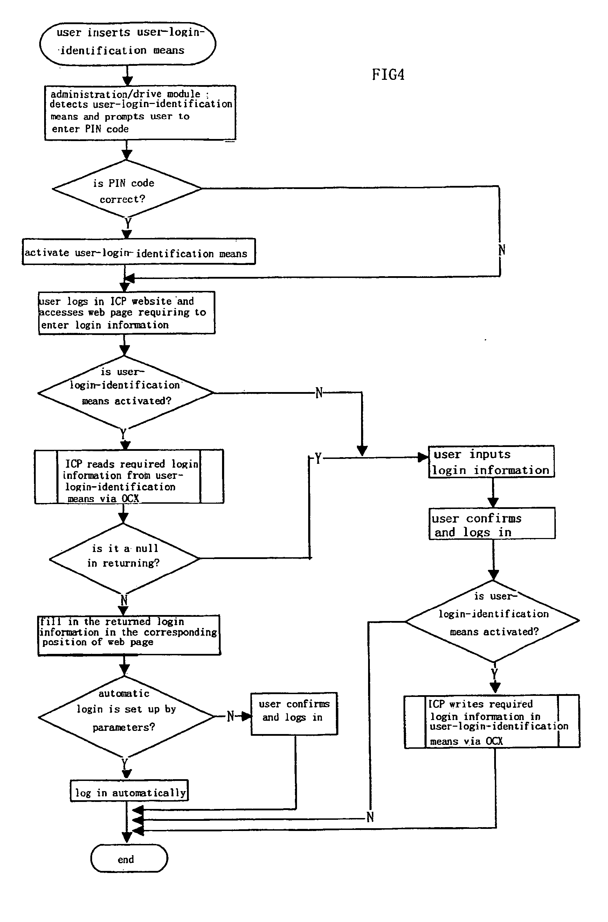

Figure 4 is a flowchart illustrating the user logging in the ICP by utilizing the login identification means according to the invention.

### Detailed Description Of The Embodiments

Next, the invention will be described in details in conjunction with the figures and the specific embodiments.

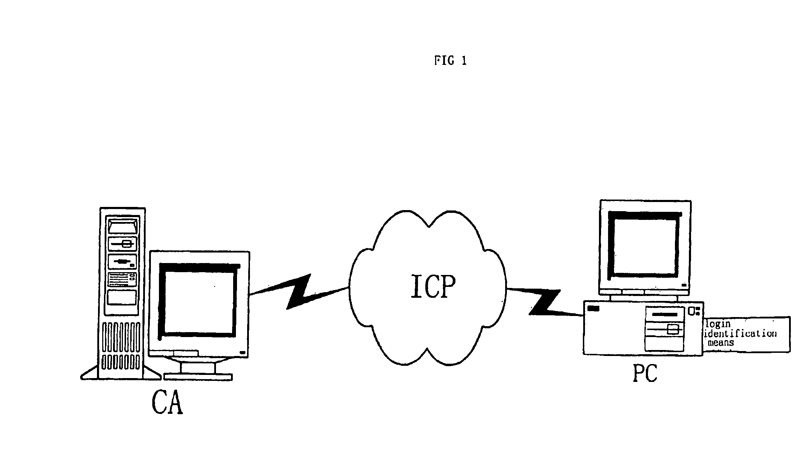

As shown in figure 1, the present invention comprises a computer, Internet networks, an ICP and a user-login-identification means. The computer can log in the Internet network to communicate with different ICPs; the user-login-identification means is a device which can connect with the computer from outside and has at least an identification number and encryption storage space, and performs the information transmission by operating the computer. Particularly the ICP adds an interface module in the login web page and accesses the user-login-identification means via the interface module. The ICP also provides an administration/drive module monitoring access of the user-login-identification means to set up a connection and hang up the connection for the user-login-identification means in the login web page; the user-login-identification means is provided with an ID number , and the user's login identification information is stored in the user-login-identification means.

Particularly, the user-login-identification means can be an external and portable memory means with a standard data interface, or a card-reader means or an ID identifying means thereof, for example, a USB storage device, a CF card, a MMC card, a SD card, a SMC card, an IBM Micro Drive card, a flash storage module or an IC card, or the corresponding card reader therein.

Moreover, the user-login-identification means can be a computer peripheral, such as a keyboard, a mouse, a handwriting board, sound boxes, a portable PDA, a music player, or an electrical dictionary.

Wherein the user-login-identification means can have a unique identification number, or a plurality of identification numbers for the use of various people by partitioned control.

The method and system according to present invention provide a universal network ID, which can be identified uniquely. By utilizing the login-identification means, any user can automatically log in all the authorized ICPs or the ICPs with the right to access the login-identification means.

The login verification serving party such as CA can proceed online authorization and authentication with the ICP and the user-login-identification means; authentication between the ICP and the user-login-identification means can be self accomplished offline—without the login verification serving party participating in, and according to the information stored in the user-login-identification means.

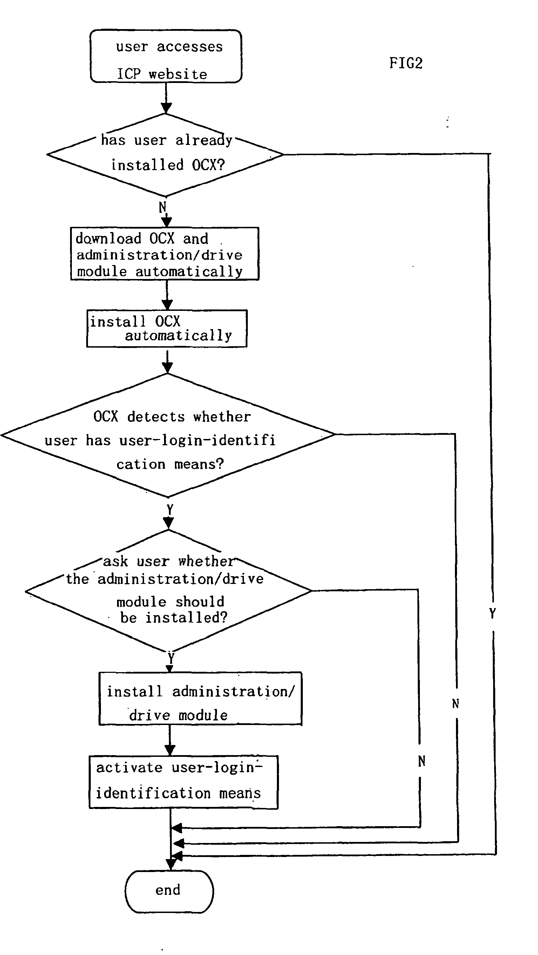

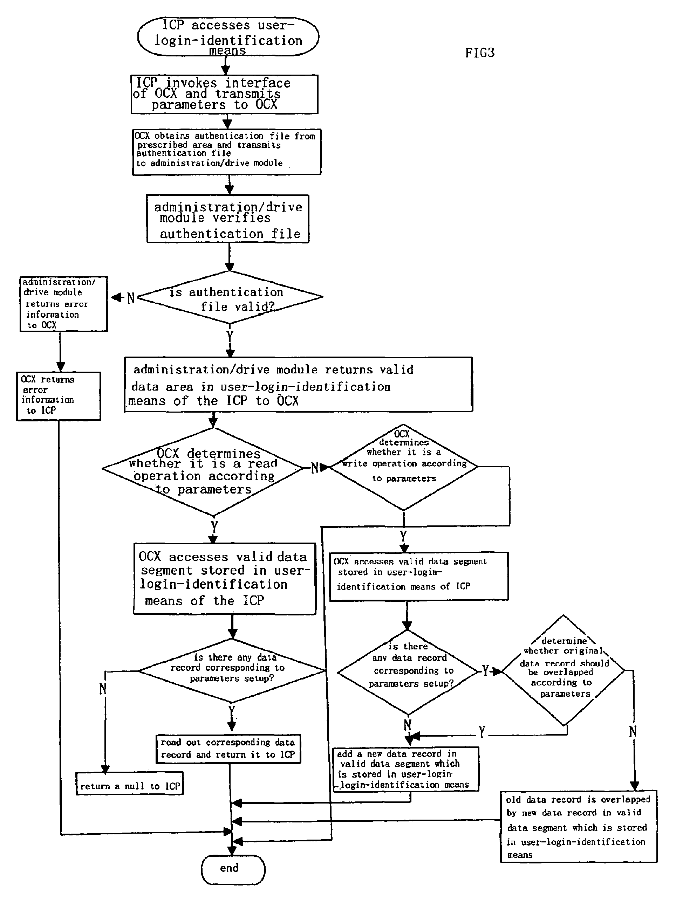

Wherein, the procedure of the authentication and login between the ICP and the user-login-identification means will be described in combination with the figure 2, 3. It comprises at least an Internet Content Provider (ICP) and a user-login-identification means which can access an online terminal; wherein the ICP adds an interface module in a login web page, and accesses the user-login-identification means via the interface module. The ICP also provides an administration/drive module monitoring access of the user-login-identification means to set up a connection and hang up the connection for the user-login-identification means in the login web page; the user-login-identification means has a unique ID number, and is utilized in storing the user's login identification information. The administration/drive module can lead in and/or lead out data stored in the user-login-identification means so as to backup the data. The administration/drive module can also automatically log in the network after the ICP has accessed the user-login-identification means via the interface module and verified the identification information.

The steps are as follows:
1. Inserting the user-login-identification means and downloading the administration/drive module;
2. Entering the PIN code , activating the user-login-identification means and logging in the web page requiring to enter the login information; the ICP access authentication information is stored in the user-login-identification means to verify whether the accessing ICP has been authorized to access it. The authentication file includes the ICP identification information and/or the specific area guide information of the user-login-identification means and/or data processing guide information and/or time information. The registration table of the ICP identification information is stored in the user-login-identification means, to guide different ICPs only accessing the corresponding areas or contents in the means. Different ICPs store or read the respective login-identification information in the corresponding areas of the user-login-identification means.
3. The ICP accesses the user-login-identification means and proceeds authentication; if the verification is valid, the access is permitted; otherwise, the access is not permitted. Wherein the accessing comprises checking the user ID identification information stored in the user-login-identification means or generating the user ID identification information in the user-login-identification means. Particularly, the ICP authentication comprises obtaining the authentication file via the interface module, transmitting the file to the administration/drive module, decrypting the authentication file by the administration/drive module, and accessing the user-login-identification means.
4. The ICP reads the information stored in the user-login-identification means, and if the login identification information is obtained, the interface module returns the login identification information to the ICP web page and determines whether a login-submit or an automatic submit & login should be performed according to the user's setup; if the login identification information is not available, the interface module informs the web page that login identification information is not available, and stores the generated login identification information in the user-login-identification means. Storing the login identification information includes the user logging in the ICP website for the first time, or the user selecting to manually enter the login information once more, or the first time use of the user-login-identification means, and the ICP stores the login identification information in the user-login-identification means via the interface module.

If the ICP web page is provided with a registration information window, the ICP invokes the parameters of the interface module and saves several sets of registration information of the same web page or the last set of registration information in the user-login-identification means, which can be displayed in the ICP web page. In particular:

The ICP web page is provided with a registration information window. The ICP accesses the user-login-identification means via the interface module, and verifies the login identification information provided by the ICP web page, and stores the new login identification information data in the user-login-identification means to overwrite the original login identification information, and then transfers the relating information to the ICP web page. The information is displayed in the web page after being obtained.

The ICP web page is provided with a plurality of window links of the registration information. The ICP reads the user-login-identification information stored in the user-login-identification means, and verifies the login identification information provided by the ICP web page, stores the login identification information in the user-login-identification means in the case of negative verification, or directly reads and transfers the relating information to the ICP web page in the case of positive verification. The information is displayed in the web page after being obtained.

Another embodiment of the invention provides a method and a system for authorizing and authenticating online among the login verification serving party, the ICP and the user-login-identification means to log in the network. The method comprises the following steps:

According to the invention, the administration/drive module is added by the ICP according to the authorization of the login verification serving party. The authorized ICP stores and reads out the user login information via the interface of the interface module (e.g. OCX). According to this solution, the ICP only need to make simple modifications to the web page. The user uses a user-login-identification means with an encryption storage space of over 1 M Bytes to store the user's login information. The data stored in the encryption storage space can be accessed by API. The user can activate the user-login-identification means of the administration/drive module by using the PIN code.

The login verification serving party provides an encrypted authentication file for each ICP to authorize and authenticate the authorization. Because different ICPs have different authentication files, each ICP could only access its own data and has no right to access the data of other ICP; an OCX is provided, and the ICP adds the OCX in its own web page so as to store and read out the relating information in the corresponding area of the user-login-identification means by invoking the Interface of the OCX. The OCX is also responsible for transmitting the ICP authentication files to the server of the login verification serving party for verification.

The server terminal of the login verification serving party is used for verifying the ID of each ICP.

The user-login-identification means of the administration/drive module is based on the USB interface, and is provided with an encryption storage space of over 1 M (which can be accessed via the API). There are two methods which can perform encryption. Simple encryption: protecting an encryption area by using only the user PIN code, and if the code is correct, the data stored in the encryption storage space can be accessed; PKI encryption: including RSA 512 PKI key management, data stream encryption, and multi-key authorization management.

Wherein the administration/drive module is realized as follows:

After the administration/drive module is installed, a corresponding Tray Icon will be added on the user's desktop; and the user can activate or close the administration/drive module. The user has to enter the password to activate the administration/drive module; the administration/drive module monitors the port of the user-login-identification means, when the user inserts the user-login-identification means of the administration/drive module, the user is asked to enter the password to activate the user-login-identification means of the administration/drive module. If the user cancels the operation or the entered password is not correct, the user-login-identification means of the administration/drive module will not be activated (in an inactive state). When the user pulls out the user-login-identification means of the administration/drive module, the user-login-identification means of the administration/drive module will be closed; an function of modifying the PIN code is provided for the user as wel as the function for setting up the submit mode ,content input and record mode of the administration/drive module by the user, and the function for leading in and leading out the information stored in the user-login-identification means of the administration/drive module in the case of simple encryption.

The encrypted authentication file comprising the authorization information is provided to the ICP by the login verification serving party.

The interface module can provide to the ICP an interface for reading out or writing to the user-login-identification means of the administration/drive module; transmit the authentication file of the ICP to the login verification serving party for verification; and read from /write to the administration/drive module via API.

The server terminal verifies the ID of the ICP, and informs the result to the OCX.

The invention comprises the following steps:
1. The login verification serving party distributes the authentication file to the ICP for verifying the ICP ID.
2. The login verification serving party provides to the ICP a standard code sample which accesses the user-login-identification means of the administration/drive module via the Interface of the OCX. The ICP adds the storage and read code of the required data in the web page according to the code sample, and adds the link of OCX in the web page.
3. The user-login-identification means is provided with an original PIN code.
4. The user accesses the ICP website and automatically downloads the software of the user's administration/drive module and the OCX (which can also be downloaded from the website of the login verification serving party). The user is asked whether the software of the administration/drive module should be installed, and if yes, the installation is performed. A corresponding Tray Icon will be added on the user's desktop after the installation.
5. The user can activate the administration/drive module, close the administration/drive module, modify the PIN code, and lead in/out the information stored in the administration/drive module by using the administration/drive module software in the case that the user-login-identification means of the administration/drive module is connected.
6. The user accesses the ICP website, and the ICP reads the user-login-identification means of the administration/drive module via the Interface of the OCX. If the administration/drive module is in the active state, the OCX will transmit the ICP authentication file to the server terminal of the login verification serving party for verification. If the ICP is authorized, the server terminal will inform the OCX that the access to the user-login-identification means is permitted.
7. If required information is read out, the OCX will return the content to the ICP web page code and determine whether an automatic submit and login should be performed according to the user's setup. If the required information is not read out (user has not logged in), the OCX will inform the ICP web page code that required information is not read out.
8. The ICP stores data in the user's user-login-identification means of the administration/drive module via the interface of the OCX when the user logs in the ICP website by using a set of registration information for the first time or selects to log in once more(user manually enters the registration information). If the administration/drive module is in the active state, the OCX will transmit the ICP authentication file to the server terminal of the login verification serving party for verification. If the ICP is authorized, the server terminal will inform the OCX that the access to the user-login-identification means is permitted. The OCX will store the data in the user-login-identification means of the administration/drive module.

If a user has several sets of registration information in the same registration web page, to save these registration information simultaneously or only to save the last set is determined by the interface parameters added in the web page by the ICP invoking the OCX.

### Particular embodiments:

User: Mr. Wang; ICP: sina, 263; Mr. Wang's personal information is that he has two usernames in the sina, wherein the username 1 is dingding and the password is ding2002, and the username 2 is joy and the password is 991817; and he has two e-mail addresses in the 263, wherein the e-mail address 1 is xiaowang@263.net and the password is 991817, the e-mail address 2 is xiaowang111@263.net and the password is 991817. The user-login-identification means of the administration/drive module has an initial password of 12345678.

The login verification serving party distributes the authentication files to the sina and the 263(the two authentication files are different). At the same time the login verification serving party provides to the sina and the 263 the standard code sample which accesses the user-login-identification means of the administration/drive module via the Interface of the OCX.

The sina provides the automatic downloads (linking to the website of the login verification serving party) of the OCX and the user's administration/drive module software in its own website. The sina adds the relating code in the member login web page of its own website, and when the user opens the web page, the sina will read the information in the user-login-identification means of the administration/drive module via the OCX. When the user logs in manually, the sina stores the information (including form number and user's information) in the user-login-identification means of the administration/drive module via the OCX. The sina has set that the old information will be overlapped by the new information in the case that there is the information with the same form number and there is not multi-registration information link window.

The 263 provides the automatic downloads (linking to the website of the login verification serving party) of the OCX and the user's administration/drive module software in its own website. The 263 adds the relating code in the member login web page of its own website, and when the user opens the web page, the 263 will read the information in the user-login-identification means of the administration/drive module via the OCX. When the user logs in manually, the 263 stores the information (including form number and user's information) in the user-login-identification means of the administration/drive module via the OCX. Since there is multi-registration information link window in the 263, the 263 sets that the new information will be stored as a new one in the case that there is the information with the same form number in the 263.

Mr. Wang accesses www.sina.com.cn, and downloads the administration/drive module software and the OCX automatically. When the download completes, a dialogue window of "whether the administration/drive module software should be installed" is displayed. Mr. Wang selects yes and installs the administration/drive module software. When the installation completes, a Tray Icon named "the administration/drive module software" is added on the desktop. Mr. Wang inserts the user-login-identification means of the administration/drive module, and the administration/drive module software prompts " enter the password:", then Mr. Wang enters "12345678" and selects yes, so that administration/drive module is activated. The Tray Icon is shown as in the active state. Mr. Wang clicks the Tray Icon of "the administration/drive module", and selects "modify the password", and then enters the password of 12345678; and enters the new password of wang1817; and confirms the new password of wang 1817. After the confirmation, the password is modified into wang1817, and the Tray Icon is still shown as in the active state.

Mr. Wang selects user-login on the sina home page. The relating code added in the member login web page by the sina tries to read Mr. Wang's user-login-identification means of the administration/drive module via the interface of the OCX (which introduces the parameters such as form number). The OCX accesses the user-login-identification means of the administration/drive module, and confirms that it is in the active state. The OCX obtains the sina's authentication file and transmits it to the administration/drive module. The administration/drive module looks up the relating information in Mr. Wang's user-login-identification means of the administration/drive module according to the authentication file and the form number, and if no required information is found, the OCX will informs the sina that the page code does not obtain the required information. Mr. Wang enters the login information in which the username is dingding and the password is ding2002, and then logs in. The relating code added in the member login web page by the sina tries to store the data in Mr. Wang's user-login-identification means of the administration/drive module via the interface of the OCX (which introduces the parameters such as form number, user information, etc.). The OCX accesses the user-login-identification means of the administration/drive module and confirms that it is in the active state. The OCX obtains the authentication file of the sina and transmits the file to the administration/drive module. The administration/drive module looks up the relating information in Mr. Wang's user-login-identification means of the administration/drive module according to the authentication file and the form number, and the OCX stores the data in Mr. Wang's user-login-identification means of the administration/drive module in the case that no identical form number is found. Mr. Wang closes the sina and enters the home page of the sina again, and it is detected that the administration/drive module software and the OCX have already been downloaded, and the automatic download of the administration/drive module software and the OCX is not needed. Mr. Wang selects the user-login. The relating code added in the member login web page by the sina tries to read Mr. Wang's user-login-identification means of the administration/drive module via the interface of the OCX (which introduces the parameters such as form number, etc.). The OCX accesses the user-login-identification means of the administration/drive module and confirms that it is in the active state. The OCX obtains the authentication file of the sina and transmits the file to the administration/drive module. The administration/drive module looks up the relating information in Mr. Wang's user-login-identification means of the administration/drive module according to the authentication file and the form number, and the OCX transmits the information to the sina web page code in the case that the required information is found. The sina web page code obtains the information and then automatically logs in by using the username of dingding and the password of ding2002. Mr. Wang selects to log in once more and enters the login information in which the username is joy and the password is 991817, and then logs in. The relating code added in the member login web page by the sina tries to store the data in Mr. Wang's user-login-identification means of the administration/drive module via the interface of the OCX (which introduces the parameters such as form number, user information, etc.). The OCX accesses the user-login-identification means of the administration/drive module and confirms that it is in the active state. The OCX obtains the authentication file of the sina and transmits the file to the administration/drive module. The administration/drive module looks up the relating information in Mr. Wang's user-login-identification means of the administration/drive module according to the authentication file and the form number, and the OCX stores the new data in Mr. Wang's user-login-identification means of the administration/drive module to overlap the old data in the case that the same form number is found. Mr. Wang clicks the Tray Icon of the "administration/drive module" and selects "close the administration/drive module", and then the Tray Icon is shown as in the inactive state.

Mr. Wang accesses www.263.net. It is detected that the administration/drive module software and the OCX have already been downloaded, and the automatic download of the administration/drive module software and the OCX is not needed. The mail-login relating code added in the home page by the 263 tries to read Mr. Wang's user-login-identification means of the administration/drive module via the interface of the OCX (which introduces the parameters such as form number). The OCX accesses the user-login-identification means of the administration/drive module and finds that it is in the inactive state. The OCX informs the 263 that the page code does not obtain the required information. Mr. Wang clicks the Tray Icon of the "administration/drive module" and selects the "activate the administration/drive module", and then the Tray Icon is shown as in the active state. Mr. Wang enters the mail-login information, in which the username is xiaowang@263.net and the password is 991817, and then logs in. The mail-login related code added in the home page by the 263 tries to store the data in Mr. Wang's user-login-identification means of the administration/drive module via the interface of the OCX (which introduces the parameters such as form number, user information, etc.). The OCX accesses the user-login-identification means of the administration/drive module and finds that it is in the active state. The OCX obtains the authentication file of the 263 and transmits the file to the administration/drive module. The administration/drive module looks up the relating information in Mr. Wang's user-login-identification means of the administration/drive module according to the authentication file and the form number, and the OCX stores the data in Mr. Wang's user-login-identification means of the administration/drive module in the case that no identical form number is found. Mr. Wang selects to log in once more and enters the login information in which the username is xiaowang111@263.net and the password is 991817, and then logs in. The mail-login relating code added in the home page by the 263 tries to store the data in Mr. Wang's user-login-identification means of the administration/drive module via the interface of the OCX (which introduces the parameters such as form number, user information, etc.). The OCX accesses the user-login-identification means of the administration/drive module and confirms that it is in the active state. The OCX obtains the authentication file of the 263 and transmits the file to the administration/drive module. The administration/drive module looks up the relating information in Mr. Wang's user-login-identification means of the administration/drive module according to the authentication file and the form number, and the OCX stores the new data in Mr. Wang's user-login-identification means of the administration/drive module without changing the old data in the case that the same form number is found. Mr. Wang closes the 263 and enters the home page of the 263 again, and it is detected that the administration/drive module software and the OCX have already been downloaded, and the automatic download of the administration/drive module software and the OCX is not needed. Mr. Wang selects the user-login. The mail-login relating code added in the home page by the 263 tries to read Mr. Wang's user-login-identification means of the administration/drive module via the interface of the OCX (which introduces the parameters such as form number, etc.). The OCX accesses the user-login-identification means of the administration/drive module and confirms that it is in the active state. The OCX obtains the authentication file of the 263 and transmits the file to the administration/drive module. The administration/drive module looks up the relating information in Mr. Wang's user-login-identification means of the administration/drive module according to the authentication file and the form number, and the OCX transmits the information to the 263 web page code in the case that two pieces of required information are found. The 263 web page code obtains the information, and then displays two usernames of xiaowang@263.net and xiaowang111@263.net in the pulldown box of the username item. Mr. Wang clicks xiaowang@263.net and automatically logs in by using the username of xiaowang@263.net and the password of 991817. Mr. Wang pulls out the user-login-identification means of the administration/drive module, and the administration/drive module software closes the administration/drive module. The Tray Icon is shown as in the inactive state.

The authentication file is an encryption file. The authentication file can include the primary information such as valid time, valid data segment, etc. wherein the valid time defines the period of validity of the authentication file. If the authentication file exceeds the valid date, it is invalid, and then the login verification serving party has to distribute the authentication file to the ICP again. The valid data segment defines the valid data segment which can be accessed by the ICP in the user-login-identification means. The authentication file is transmitted to the administration/drive module by the OCX and decrypted by the administration/drive module. The procedure can also be performed by the following method:

The login verification serving party distributes the authentication file to the ICP, and the OCX transmits the authentication file to the login verification serving party in the case that the ICP tries to access the user-login-identification means, and then the login verification serving party transmits the verification result back to the OCX. In this case, the authentication file distributed to the ICP can only comprise simple index and verification information, but the login verification serving party has to maintain a whole database of authentication files in order to provide more renewal information.

## Claims

1. A method for centralizing administration of user registration information across networks, **characterized by**:
communicating, by an Internet Content Provider (ICP), with a user-login-identification means which can be accessed by an online terminal (PC); wherein the ICP adds an interface module in a ICP login web page and also provides an administration/drive module monitoring access of the user-login-identification means to set up a connection between the ICP and the user-login-identification and hang up the connection in the login web page; the user-login-identification means has at least an ID number, and user's login identification information and a registration table of the ICP identification information are stored in the user-login-identification means wherein different ICPs store or read the respective login-identification information in the corresponding areas of the user-login-identification means and the registration table of the ICP identification information is used to guide different ICPs only accessing the corresponding areas or contents in the user-login-identification means;
obtaining, by the ICP, an authentication file via the interface module from the user-login-identification means when the user-login-identification means is activated, transmitting, by the ICP, the authentication file to the administration/drive module and accessing, by the ICP, the corresponding area in the user-login-identification means after the authentication file has been decrypted by the administration/drive module; and
reading, by the ICP, the corresponding area in user-login-identification means, and if user's login identification information is obtained, returning, by the interface module, the login identification information to the ICP login web page and determining whether a login-submit or an automatic submit according to the user's setup; if the user's login identification information is not obtained, informing, by the interface module, the ICP login web page that the login identification information is not available and storing a generated user's login identification information in the corresponding area in user-login-identification means.

2. The method of claim 1, wherein the administration/drive module can take out data stored in the user-login-identification means and/or input data into the user-login-identification means so as to backup the data; the administration/drive module can automatically log in, in the case that the ICP accesses the user-login-identification means via the interface module and verifies the identification information.

3. The method of claim 1, wherein an ICP web page is provided with a registration information window; the method further including: obtaining, by the registration information window, registration information of the ICP login web page, storing, by the ICP, several sets of obtained registration information of the ICP login web page or the last set of obtained registration information of the ICP login web page in the user-login-identification means via the interface module, and displaying, by the ICP, the registration information of the ICP login web page on the ICP login web page.

4. The method of claim 3, wherein the ICP accesses the user-login-identification means via the interface module and verifies the user's login identification information provided by the ICPlogin web page, and stores new user's login identification information, generated by the ICP, in the user-login-identification means to overwrite original user's login identification information, and transfers relating information which is related to the new user's login identification information to the ICP web page; the relating information is displayed on the ICP login web page after being obtained.

5. The method of claim 3, wherein the ICP reads the user's login identification information stored in the user-login-identification means and matches the read user's login identification information with the login identification information stored in the ICP login web page; if the read user's login identification information does not match the user's login identification information stored in the ICP login web page, the ICP stores the user's login identification information stored in the ICP login web page in the user-login-identification means, and if the read user's login identification information matches the user's login identification information stored in the ICP login web page, the user's login identification information is directly read out and the relating information is transferred to the ICP web page; the relating information is displayed on the web page after being obtained.

6. The method of claim 1, further including implementing, by a login verification serving party, prior authentication to the ICP and obtaining, by the login verification serving party, guide information of the user-login-identification means; transmitting, by the login verification serving party, a code for accessing the user-login-identification means to the ICP, adding, by the ICP, the user's login identification information in the ICP login web page according to the code, and transmitting, by the interface module, the ICP access authentication information to the login verification serving party for verification; if the ICP access authentication information passes the verification, the ICP is permitted to access to the user-login-identification means; activating, by a user, the user-login-identification means by using a password, and then accessing, by the ICP, the login verification serving party for the prior authentication via the interface module; if the prior authentication is valid, the ICP can operate the user-login-identification means via the interface module; the password used by the user is provided by the login verification serving party or preset in the user-login-identification means.

7. A system for centralizing administration of user registration information across networks, **characterized by**, comprising a computer (PC), Internet networks, an ICP and a user-login-identification means, wherein the computer can log in the Internet networks to communicate with the ICP; the user-login-identification means can access the computer from outside and has at least an identification number and encrypted storage space; the user-login-identification means performs the information transmission by operating the computer; and the ICP adds an interface module in a ICP login web page and also provides an administration/drive module monitoring access of the user-login-identification means to set up a connection between the ICP and the user-login-identification and hang up the connection in the login web page; user's login identification information and a registration table of the ICP identification information are stored in the user-login-identification means; different ICPs can store or read the respective login-identification information in the corresponding areas of the user-login-identification means and the registration table of the ICP identification information is used to guide different ICPs only accessing the corresponding areas or contents in the user-login-identification means; the ICP can obtain an authentication file via the interface module from the user-login-identification means when the user-login-identification means is activated, transmit the authentication file to the administration/drive module and access the corresponding area in the user-login-identification means after the authentication file has been decrypted by the administration/drive module, read the corresponding area in user-login-identification means, if user's login identification information is obtained, the interface module returns the login identification information to the ICP login web page and determines whether a login-submit or an automatic submit according to the user's setup; if the user's login identification information is not obtained, the interface module informs the ICP login web page that the login identification information is not available and stores a generated user's login identification information in the corresponding area in user-login-identification means.

8. The system of claim 7, wherein the ICP is connected with a login verification serving party which transmits a code for accessing the user-login-identification means to the ICP, and the ICP adds user's login identification information in the ICP login web page according to the code, and the interface module transmits ICP access authentication information to the login verification serving party for verification; if passed the verification, the ICP is permitted to access the user-login-identification means; information transmission between the computer and the user-login-identification means is processed with encryption or decryption; the encryption includes protecting an encryption area by using the user's PIN code or utilizing RSA 512PKI key management encryption method.; the user-login-identification means is also provided with a storage region for storing the information of the ICP itself.

9. The system of claim 7, wherein the user-login-identification means is an external and portable memory means with a standard data interface, or a card-reader means or an ID identifying means thereof.

## Patentansprüche

1. Verfahren zur Zentralisierung der Administration von benutzerregistrierten Informationen über Netzwerke hinweg, **gekennzeichnet durch**:
Kommunizieren, **durch** einen Internet Content Provider (ICP), mit einem Anwender-Anmelde-Identifizierungsmittel, auf das über eine Online-Endstelle (PC) zugegriffen werden kann; wobei der ICP ein Schnittstellen-Modul in einer ICP-Anmelde-Webseite hinzufügt und auch ein Administrations-/Antriebsmodul bereitstellt, das Zugriff des Anwender-Anmelde-Identifizierungsmittels zur Einrichtung einer Verbindung zwischen dem ICP und der Anwender-Anmelde-Identifizierung überwacht und die Verbindung in der Anmelde-Webseite beendet; das Anwender-Anmelde-Identifizierungsmittel mindestens eine ID-Nummer hat, und die Anmelde-Identifizierungsinformationen des Anwenders und eine Registriertabelle der ICP-Identifizierungsinformationen im Anwender-Anmelde-Identifizierungsmittel gespeichert sind, wobei unterschiedliche ICP die jeweilige Anmelde-Identifizierungsinformationen in den entsprechenden Bereichen des Anwender-Anmelde-Identifizierungsmittels speichern oder lesen, und die Registriertabelle der ICP-Identifizierungsinformationen zur Führung verschiedener ICP benutzt wird, die nur auf entsprechende Bereiche oder Inhalte im Anwender-Anmelde-Identifizierungsmittel zugreifen;
Erhalten, **durch** den ICP, einer Authentifizierungs-datei über das Schnittstellen-Modul vom Anwender-Anmelde-Identifizierungsmittel, wenn das Anwender-Anmelde-Identifizierungsmittel aktiviert ist, Senden, **durch** den ICP, der Authentifizierungsdatei an das Administrations-/Antriebsmodul und Zugreifen, **durch** den ICP, auf den entsprechenden Bereich im Anwender-Anmelde-Identifizierungsmittel nachdem die Authentifizierungsdatei **durch** das Administrations-/Antriebsmodul entschlüsselt worden ist; und
Lesen, **durch** den ICP, des entsprechenden Bereichs im Anwender-Anmelde-Identifizierungsmittel, und wenn die Anmelde-Identifizierungsinformationen des Anwenders erhalten worden sind, Rückgabe, **durch** das Schnittstellen-Modul, der Anmelde-Identifizierungsinformationen an die ICP-Anmelde-Webseite und Bestimmen, ob eine Anmelde-Absendung oder eine automatische Absendung mit der Einrichtung des Anwenders übereinstimmt; wenn die Anmelde-Identifizierungsinformationen des Anwenders nicht erhalten worden sind, Informieren, **durch** das Schnittstellen-Modul, der ICP-Anmelde-Webseite darüber, dass die Anmelde-Identifizierungsinformationen nicht verfügbar sind, und Speichern von erzeugten Anmelde-Identifizierungsinformationen des Anwenders im entsprechenden Bereich im Anwender-Anmelde-Identifizierungsmittel.

2. Verfahren nach Anspruch 1, wobei das Administrations-/Antriebsmodul im Anwender-Anmelde-Identifizierungsmittel gespeicherte Daten herausnehmen und/oder Daten in das Anwender-Anmelde-Identifizierungsmittel eingeben kann, um die Daten zu sichern; das Administrations-/Antriebsmodul kann sich automatisch anmelden in dem Fall, dass der ICP über das Schnittstellen-Modul auf das Anwender-Anmelde-Identifizierungsmittel zugreift und die Identifizierungsinformationen verifiziert.

3. Verfahren nach Anspruch 1, wobei die ICP-Webseite mit einem Registrier-Informationsfenster bereitgestellt wird; wobei das Verfahren ferner Folgendes aufweist: Erhalten, durch das Registrier-Informationsfenster, von Registrier-informationen von der ICP-Anmelde-Webseite, Speichern, durch den ICP, mehrerer Sätze von erhaltenen Registrierinformationen von der ICP-Anmelde-Webseite oder des letzten Satzes von erhaltenen Registrierinformationen von der ICP-Anmelde-Webseite im Anwender-Anmelde-Identifizierungsmittel über das Schnittstellen-Modul, und Anzeigen, durch den ICP, der Registrierinformationen der ICP-Anmelde-Webseite auf der ICP-Anmelde-Webseite.

4. Verfahren nach Anspruch 3, wobei der ICP über das Schnittstellen-Modul auf das Anwender-Anmelde-Identifizierungsmittel zugreift und die von der ICP-Anmelde-Webseite bereitgestellten AnmeldeIdentifizierungsinformationen des Anwenders verifiziert und neue Anmelde-Identifizierungsinformationen des Anwenders, die vom ICP erzeugt worden sind, im Anwender-Anmelde-Identifizierungsmittel speichert, um die ursprünglichen Anmelde-Identifizierungsinformationen des Anwenders zu überschreiben, und betreffende Informationen, die sich auf die neuen Anmelde-Identifizierungsinformationen des Anwenders auf der ICP-Webseite beziehen, überträgt; die betreffenden Informationen werden, nachdem sie erhalten worden sind, auf der ICP-Anmelde-Webseite angezeigt.

5. Verfahren nach Anspruch 3, wobei der ICP die im Anwender-Anmelde-Identifizierungsmittel gespeicherten Anmelde-Identifizierungsinformationen des Anwenders liest und die gelesenen Anmelde-Identifizierungsinformationen des Anwenders mit den in der ICP-Anmelde-Webseite gespeicherten Anmelde-Identifizierungsinformationen abgleicht; wenn die gelesenen Anmelde-Identifizierungsinformationen des Anwenders nicht mit den in der ICP-Anmelde-Webseite gespeicherten Anmelde-Identifizierungsinformationen des Anwenders übereinstimmen, speichert der ICP die in der ICP-Anmelde-Webseite gespeicherten Anmelde-Identifizierungsinformationen des Anwenders im Anwender-Anmelde-Identifizierungsmittel, und wenn die gelesenen Anmelde-Identifizierungsinformationen des Anwenders mit den in der ICP-Anmelde-Webseite gespeicherten Anmelde-Identifizierungsinformationen des Anwenders übereinstimmen, werden die Anmelde-Identifizierungsinformationen des Anwenders direkt ausgelesen, und die betreffenden Informationen werden an die ICP-Webseite übertragen; die betreffenden Informationen werden, nachdem sie erhalten worden sind, auf der Webseite angezeigt.

6. Verfahren nach Anspruch 1, ferner aufweisend Implementieren, durch eine Anmeldungsverifizierungs-Dienstleistungsinstanz, vor der Authentifizierung an den ICP, und Erhalten, durch die Anmeldungsverifizierungs-Dienstleistungsinstanz, von Führungsinformationen vom Anwender-Anmelde-Identifizierungsmittel; Senden, durch die Anmeldungsverifizierungs-Dienstleistungsinstanz, eines Codes für Zugriff auf das Anwender-Anmelde-Identifizierungsmittel zum ICP, Hinzufügen, durch den ICP, der Anmelde-Identifizierungsinformationen des Anwenders in der ICP-Anmelde-Webseite entsprechend dem Code, und Senden, durch das Schnittstellen-Modul, der ICP-Zugriffs-Authentifizierungs-informationen an die Anmeldungsverifizierungs-Dienstleistungsinstanz für Verifizierung; wenn die ICP-Zugriffs-Authentifizierungsinformationen die Verifizierung bestehen, ist dem ICP der Zugang zum Anwender-Anmelde-Identifizierungsmittel gestattet; Aktivieren, durch einen Anwender, des Anwender-Anmelde-Identifizierungsmittels durch Anwenden eines Kennworts, und danach Zugang, durch den ICP, zur Anmeldungsverifizierungs-Dienstleistungsinstanz für die vorhergehende Authentifizierung über das Schnittstellen-Modul; wenn die vorhergehende Authentifizierung gültig ist, kann der ICP das Anwender-Anmelde-Identifizierungsmittel über das Schnittstellen-Modul betätigen; das vom Anwender benutzte Kennwort wird von der Anmeldungsverifizierungs-Dienstleistungsinstanz bereitgestellt oder ist im Anwender-Anmelde-Identifizierungsmittel voreingestellt.

7. System zur Zentralisierung der Administration von benutzerregistrierten Informationenen über Netzwerke hinweg, **gekennzeichnet durch** Aufweisen eines Computers (PC), eines Internet-Netzwerks, eines ICP und eines Anwender-Anmelde-Identifizierungsmittels, wobei sich der Computer beim Internet-Netzwerk anmelden kann, um mit dem ICP zu kommunizieren; das Anwender-Anmelde-Identifizierungsmittel kann von außen auf den Computer zugreifen und hat mindestens eine Identifizierungsnummer und einen verschlüsselten Speicherplatz; das Anwender-Anmelde-Identifizierungsmittel führt das Senden von Informationen **durch** Betreiben des Computers **durch**; und der ICP fügt ein Schnittstellen-Modul in einer ICP-Anmelde-Webseite hinzu und stellt auch ein Administrations-/Antriebsmodul bereit, das Zugriff des Anwender-Anmelde-Identifizierungsmittels zur Einrichtung einer Verbindung zwischen dem ICP und der Anwender-Anmelde-Identifizierung überwacht und die Verbindung in der Anmelde-Webseite beendet; die Anmelde-Identifizierungsinformationen des Anwenders und eine Registriertabelle der ICP-Identifizierungsinformationen sind im Anwender-Anmelde-Identifizierungsmittel gespeichert; unterschiedliche ICP können die jeweiligen Anmelde-Identifizierungsinformationen in den entsprechenden Bereichen des Anwender-Anmelde-Identifizierungsmittels speichern oder lesen, und die Registriertabelle der ICP-Identifizierungsinformationen wird zur Führung verschiedener ICP benutzt, die nur auf entsprechende Bereiche oder Inhalte im Anwender-Anmelde-Identifizierungsmittel zugreifen; der ICP kann, über das Schnittstellen-Modul, vom Anwender-Anmelde-Identifizierungsmittel eine Authentifizierungsdatei erhalten, wenn das Anwender-Anmelde-Identifizierungsmittel aktiviert ist, die Authentifizierungsdatei an das Administrations-/Antriebsmodul senden und auf den entsprechenden Bereich im Anwender-Anmelde-Identifizierungsmittel nachdem die Authentifizierungsdatei **durch** das Administrations-/Antriebsmodul entschlüsselt worden ist zugreifen, den entsprechenden Bereich im Anwender-Anmelde-Identifizierungsmittel lesen, wenn die Anmelde-Identifizierungsinformationen des Anwenders erhalten worden sind, gibt das Schnittstellen-Modul die Anmelde-Identifizierungsinformationen an die ICP-Anmelde-Webseite zurück und bestimmt, ob eine Anmelde-Absendung oder eine automatische Absendung mit der Einrichtung des Anwenders übereinstimmt; wenn die Anmelde-Identifizierungsinformationen des Anwenders nicht erhalten worden sind, informiert das Schnittstellen-Modul, die ICP-Anmelde-Webseite darüber, dass die Anmelde-Identifizierungsinformationen nicht verfügbar sind, und speichert erzeugte Anmelde-Identifizierungsinformationen des Anwenders im entsprechenden Bereich im Anwender-Anmelde-Identifizierungsmittel.

8. System nach Anspruch 7, wobei der ICP mit einer Anmeldungsverifizierungs-Dienstleistungsinstanz verbunden ist, die einen Code für Zugang zum Anwender-Anmelde-Identifizierungsmittel an den ICP sendet, und der ICP Anmelde-Identifizierungsinformationen des Anwenders in der ICP-Anmelde-Webseite entsprechend dem Code hinzufügt, und das Schnittstellen-Modul ICP-Zugriffs-Authentifizierungsinformationen an die Anmeldungsverifizierungs-Dienstleistungsinstanz für Verifizierung sendet; wenn die Verifizierung besteht, ist dem ICP der Zugang zum Anwender-Anmelde-Identifizierungsmittel gestattet; Senden von Informationen zwischen dem Computer und dem Anwender-Anmelde-Identifizierungsmittel wird mit Verschlüsselung oder Entschlüsselung verarbeitet; die Verschlüsselung weist Schutz eines Verschlüsselungsbereichs durch Anwenden der PIN des Anwenders oder Nutzung des RSA 512PKI Schlüsselmanagement-Verschlüsselungsverfahrens; das Anwender-Anmelde-Identifizierungsmittel weist auch einen Speicherbereich für Speichern der Informationen über den ICP selbst auf.

9. System nach Anspruch 7, wobei das Anwender-Anmelde-Identifizierungsmittel ein externes und portables Speichermittel mit einer Standard-Daten-Schnittstelle oder ein Kartenleser-Mittel oder ein ID-Identifizier-Mittel davon ist.

## Revendications

1. Procédé de centralisation de l'administration des informations d'enregistrement d'usagers entre réseaux, **caractérisé par** :
la communication, par un Fournisseur de Contenu Internet (ICP), avec un moyen d'identification de connexion d'usager sollicitable par un terminal en ligne (PC) ; dans lequel l'ICP ajoute un module d'interface dans une page Web de connexion de l'ICP et fournit aussi un module d'administration/commande qui surveille l'accès du moyen d'identification de connexion d'usager pour établir une connexion entre l'ICP et l'identification de connexion d'usager et suspendre la connexion dans la page Web de connexion ; le moyen d'identification de connexion d'usager a au moins un numéro d'ID, et des informations d'identification de connexion de l'usager et une table d'enregistrement des informations d'identification d'ICP sont stockées dans le moyen d'identification de connexion d'usager, dans lequel différents ICP stockent ou lisent les informations d'identification de connexion respectives dans les zones correspondantes du moyen d'identification de connexion d'usager et la table d'enregistrement des informations d'identification d'ICP est utilisée pour guider différents ICP sollicitant uniquement des zones ou contenus correspondants dans le moyen d'identification de connexion d'usager ;
l'obtention, par l'ICP, d'un fichier d'authentification par l'intermédiaire du module d'interface depuis le moyen d'identification de connexion d'usager quand le moyen d'identification de connexion d'usager est activé, la transmission, par l'ICP, du fichier d'authentification au module d'administration/commande et la sollicitation, par l'ICP, de la zone correspondante dans le moyen d'identification de connexion d'usager après que le fichier d'authentification a été décrypté par le module d'administration/commande ; et
la lecture, par l'ICP, de la zone correspondante dans le moyen d'identification de connexion d'usager, et si les informations d'identification de connexion de l'usager sont obtenues, le renvoi, par le module d'interface, des informations d'identification de connexion à la page Web de connexion de l'ICP et la détermination d'une soumission de connexion ou d'une soumission automatique en fonction de la configuration de l'usager ; si les informations d'identification de connexion de l'usager ne sont pas obtenues, l'information, par le module d'interface, à la page Web de connexion de l'ICP, que les informations d'identification de connexion ne sont pas disponibles et le stockage d'informations d'identification de connexion de l'usager générées dans la zone correspondante dans le moyen d'identification de connexion d'usager.

2. Procédé selon la revendication 1, dans lequel le module d'administration peut extraire des données stockées dans le moyen d'identification de connexion d'usager et/ou entrer des données dans le moyen d'identification de connexion d'usager de façon à sauvegarder les données ; le module d'administration/commande peut se connecter automatiquement, dans le cas où l'ICP sollicite le moyen d'identification de connexion d'usager par l'intermédiaire du module d'interface et vérifie les informations d'identification.

3. Procédé selon la revendication 1, dans lequel une page Web d'ICP est dotée d'une fenêtre d'informations d'enregistrement ; le procédé comportant en outre : l'obtention, par la fenêtre d'informations d'enregistrement, d'informations d'enregistrement de la page Web de connexion de l'ICP, le stockage, par l'ICP, de plusieurs ensembles d'informations d'enregistrement obtenues de la page Web de connexion de l'ICP ou du dernier ensemble d'informations d'enregistrement obtenues de la page Web de connexion de l'ICP dans le moyen d'identification de connexion d'usager par l'intermédiaire du module d'interface, et l'affichage, par l'ICP, des informations d'enregistrement de la page Web de connexion de l'ICP sur la page Web de connexion de l'ICP.

4. Procédé selon la revendication 3, dans lequel l'ICP sollicite le moyen d'identification de connexion d'usager par l'intermédiaire du module d'interface et vérifie les informations d'identification de connexion de l'usager fournies par la page Web de connexion de l'ICP, et stocke de nouvelles informations d'identification de connexion de l'usager, générées par l'ICP, dans le moyen d'identification de connexion d'usager pour écraser les informations d'identification de connexion de l'usager d'origine, et transfère des informations connexes qui sont liées aux nouvelles informations d'identification de connexion de l'usager à la page Web de l'ICP ; les informations connexes sont affichées sur la page Web de connexion de l'ICP après leur obtention.

5. Procédé selon la revendication 3, dans lequel l'ICP lit les informations d'identification de connexion de l'usager stockées dans le moyen d'identification de connexion d'usager et met en correspondance les informations d'identification de connexion de l'usager lues avec les informations d'identification de connexion stockées dans la page Web de connexion de l'ICP ; si les informations d'identification de connexion de l'usager lues ne correspondent pas aux informations d'identification de connexion de l'usager stockées dans la page Web de connexion de l'ICP, l'ICP stocke les informations d'identification de connexion de l'usager stockées dans la page Web de connexion de l'ICP dans le moyen d'identification de connexion d'usager, et si les informations d'identification de connexion de l'usager lues correspondent aux informations d'identification de connexion de l'usager stockées dans la page Web de connexion de l'ICP, les informations d'identification de connexion de l'usager sont lues directement et les informations connexes sont transférées sur la page Web de l'ICP ; les informations connexes sont affichées sur la page Web après leur obtention.

6. Procédé selon la revendication 1, comportant en outre la mise en oeuvre, par une partie de vérification de connexion, d'une authentification préalable auprès de l'ICP et l'obtention, par la partie de vérification de connexion, d'informations de guidage du moyen d'identification de connexion d'usager ; la transmission, par la partie de vérification de connexion, d'un code pour solliciter le moyen d'identification de connexion d'usager à l'ICP, l'ajout, par l'ICP, des informations d'identification de connexion de l'usager dans la page Web de connexion de l'ICP en fonction du code, et la transmission, par le module d'interface, des informations d'authentification d'accès à l'ICP à la partie de vérification de connexion en vue de leur vérification ; si les informations d'authentification d'accès de l'ICP réussissent la vérification, l'ICP est autorisé à solliciter le moyen d'identification de connexion d'usager ; l'activation, par un usager, du moyen d'identification de connexion d'usager en utilisant un mot de passe, puis la sollicitation, par l'ICP, de la partie de vérification de connexion pour l'authentification préalable par l'intermédiaire du module d'interface ; si l'authentification préalable est valable, l'ICP peut actionner le moyen d'identification de connexion d'usager par l'intermédiaire du module d'interface ; le mot de passe utilisé par l'utilisateur est fourni par la partie de vérification de connexion ou préréglé dans le moyen d'identification de connexion d'usager.

7. Système de centralisation de l'administration des informations d'enregistrement d'usagers entre réseaux, **caractérisé en ce qu'**il comprend un ordinateur (PC), des réseaux Internet, un ICP et un moyen d'identification de connexion d'usager, dans lequel l'ordinateur peut se connecter dans les réseaux Internet pour communiquer avec l'ICP ; le moyen d'identification de connexion d'usager peut solliciter l'ordinateur depuis l'extérieur et a au moins un numéro d'identification et un espace de stockage crypté ; le moyen d'identification de connexion d'usager exécute la transmission des informations en actionnant l'ordinateur ; et l'ICP ajoute un module d'interface dans une page Web de connexion de l'ICP et fournit aussi un module d'administration/commande qui surveille l'accès du moyen d'identification de connexion d'usager pour établir une connexion entre l'ICP et l'identification de connexion d'usager et suspendre la connexion dans la page Web de connexion ; des informations d'identification de connexion d'usager et une table d'enregistrement des informations d'identification de connexion de l'ICP sont stockées dans le moyen d'identification de connexion d'usager ; différents ICP peuvent stocker ou lire les informations d'identification de connexion respectives dans les zones correspondantes du moyen d'identification de connexion d'usager et la table d'enregistrement des informations d'identification d'ICP est utilisée pour guider différents ICP sollicitant uniquement des zones ou contenus correspondants dans le moyen d'identification de connexion d'usager ; l'ICP peut obtenir un fichier d'authentification par l'intermédiaire du module d'interface depuis le moyen d'identification de connexion d'usager quand le moyen d'identification de connexion d'usager est activé, transmettre le fichier d'authentification au module d'administration/commande et solliciter la zone correspondante dans le moyen d'identification de connexion d'usager après que le fichier d'authentification a été décrypté par le module d'administration/commande, lire la zone correspondante dans le moyen d'identification de connexion d'usager, si les informations d'identification de connexion de l'usager sont obtenues, le module d'interface renvoie les informations d'identification de connexion à la page Web de connexion d'ICP et détermine une soumission de connexion ou une soumission automatique en fonction de la configuration de l'usager : si les informations d'identification de connexion de l'usager ne sont pas obtenues, le module d'interface informe la page Web de connexion de l'ICP que les informations d'identification de connexion ne sont pas disponibles et stocke des informations d'identification de connexion de l'usager générées dans la zone correspondante dans le moyen d'identification de connexion d'usager.

8. Système selon la revendication 7, dans lequel l'ICP est connecté à une partie de vérification de connexion qui transmet un code pour solliciter le moyen d'identification de connexion d'usager à l'ICP, et l'ICP ajoute des informations d'identification de connexion de l'usager dans la page Web de connexion de l'ICP en fonction du code, et le module d'interface transmet des informations d'authentification d'accès à l'ICP à la partie de vérification de connexion en vue de leur vérification ; si la vérification est positive, l'ICP est autorisé à solliciter le moyen d'identification de connexion d'usager ; la transmission d'informations entre l'ordinateur et le moyen d'identification de connexion d'usager est traitée par cryptage ou décryptage ; le cryptage comporte la protection d'une zone de cryptage en utilisant le code PIN de l'usager ou en utilisant le procédé de cryptage de gestion par clé RSA 512PKI ; le moyen d'identification de connexion d'usager est également doté d'une région de stockage pour stocker les informations de l'ICP proprement dit.

9. Système selon la revendication 7, dans lequel le moyen d'identification de connexion d'usager est un moyen de mémoire externe et portable avec une interface de données standard, ou un moyen de lecteur de carte ou un moyen d'identification d'ID de celui-ci.
